(19) Europäisches Patentamt
European Patent Office
Office européen des brevets

(11) **EP 1 798 441 A1**

(12) **EUROPÄISCHE PATENTANMELDUNG**

(43) Veröffentlichungstag:
20.06.2007 Patentblatt 2007/25

(51) Int Cl.:
*F16F 1/32* (2006.01)       *F16D 13/58* (2006.01)

(21) Anmeldenummer: 06024699.8

(22) Anmeldetag: 29.11.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **17.12.2005   DE 102005060569**

(71) Anmelder: **LuK Lamellen und Kupplungsbau Beteiligungs KG**
**77815 Bühl (DE)**

(72) Erfinder:
• **Keck, Holger**
**77830 Bühlertal (DE)**
• **Dobos, Csaba**
**77815 Bühl (DE)**
• **Fidlin, Alexander**
**76149 Karlsruhe (DE)**
• **Reimnitz, Dirk**
**77815 Bühl (DE)**

(54) **Tellerfeder**

(57)    Die Erfindung betrifft eine Tellerfeder mit einem Grundkörper und nach innen gerichteten Zungen.

Die Erfindung zeichnet sich dadurch aus, dass der Grundkörper (2) mindestens zwei ringartige Verbindungskörper (4,5) umfasst, die an mehreren Verbindungsstellen, bezogen auf einen gemeinsamen Mittelpunkt, in radialer Richtung miteinander verbunden und in Umfangsrichtung zwischen den Verbindungsstellen in radialer Richtung voneinander beabstandet sind.

Fig. 1

EP 1 798 441 A1

**Beschreibung**

Die Erfindung betrifft eine Tellerfeder mit einem Grundkörper und nach innen gerichteten Zungen.

Aufgabe der Erfindung ist es, eine Tellerfeder mit einem Grundkörper und nach innen gerichteten Zungen so zu gestalten, dass unterschiedliche Federkennlinien darstellbar sind.

Die Aufgabe ist bei einer Tellerfeder mit einem Grundkörper und nach innen gerichteten Zungen dadurch gelöst, dass der Grundkörper mindestens zwei ringartige Verbindungskörper umfasst, die an mehreren Verbindungsstellen, bezogen auf einen gemeinsamen Mittelpunkt, in radialer Richtung miteinander verbunden und in Umfangsrichtung zwischen den Verbindungsstellen in radialer Richtung voneinander beabstandet sind. Durch die vorzugsweise zwei Verbindungskörper kann die Eigensteifigkeit der Tellerfeder deutlich erhöht werden. Dadurch ist es möglich, die Steifigkeit der Zungen bei gleich bleibender Materialdicke der Tellerfedern zu erhöhen, und zwar insbesondere ohne die Steifigkeit der Verbindungskörper zu erhöhen.

Ein bevorzugtes Ausführungsbeispiel der Tellerfeder ist dadurch gekennzeichnet, dass mindestens ein Verbindungskörper nicht konzentrisch zu dem gemeinsamen Mittelpunkt verläuft. Dadurch wird die Freiheit bei der Gestaltung von Federkennlinien deutlich erhöht, ohne dass die Dauerfestigkeit der Tellerfeder eingeschränkt wird.

Weitere bevorzugte Ausführungsbeispiele der Tellerfeder sind dadurch gekennzeichnet, dass die Verbindungskörper in Umfangsrichtung zwischen zwei Verbindungsstellen unterschiedlich gekrümmt sind. Vorzugsweise ist der radial äußere Verbindungskörper zwischen zwei Verbindungsstellen konkav nach innen gekrümmt. Der radial innere Verbindungskörper ist zwischen zwei Verbindungsstellen vorzugsweise konvex nach außen gekrümmt. Der radial innere Verbindungskörper kann zwischen zwei Verbindungsstellen aber auch stärker konvex nach au-ßen gekrümmt sein als der radial äußere Verbindungskörper. Der radial innere Verbindungskörper kann zwischen zwei Verbindungsstellen auch konkav nach innen gekrümmt sein. Durch ein gezieltes Ausbiegen einzelner Bereiche können die im Betrieb in den einzelnen Verbindungskörpern auftretenden Spannungen auf unkritische Werte beschränkt werden.

Ein weiteres bevorzugtes Ausführungsbeispiel der Tellerfeder ist dadurch gekennzeichnet, dass sich zwischen zwei Verbindungsstellen eine zusätzliche Zunge von dem radial äußeren Verbindungskörper radial nach innen erstreckt. Die zusätzliche Zunge wirkt vorzugsweise mit einer Verschleißnachstelleinrichtung zusammen.

Ein weiteres bevorzugtes Ausführungsbeispiel der Tellerfeder ist dadurch gekennzeichnet, dass mindestens einer der Verbindungskörper, insbesondere der radial innere Verbindungskörper, zwischen zwei Verbindungsstellen in axialer Richtung aus einer Fläche herausragt, in der sich die Tellerfeder erstreckt. Bei der Fläche handelt es sich vorzugsweise um eine Kegelmantelfläche.

Ein weiteres bevorzugtes Ausführungsbeispiel der Tellerfeder ist dadurch gekennzeichnet, dass die Verbindungskörper radial außerhalb der Zungen jeweils durch zwei Zungenverbindungsstege miteinander verbunden sind. Vorzugsweise ist zwischen den Zungenverbindungsstegen ein Durchgangsloch ausgespart, das sich radial nach außen erweitert.

Weitere bevorzugte Ausführungsbeispiele der Tellerfeder sind dadurch gekennzeichnet, dass der innere ringartige Verbindungskörper eine Außenkontur mit einem über dem Umfang variablen Radius aufweist, dessen Minimalwert kleiner als oder gleich dem Maximalwert eines über dem Umfang variablen Radius einer Innenkontur des inneren ringartigen Verbindungskörpers ist. Das Verhältnis aus der Differenz des Maximalwerts minus dem Minimalwert zu der Dicke der Tellerfeder ist vorzugsweise größer als oder gleich -2 und kleiner als oder gleich 100. Vorzugsweise weist der radial innere Verbindungskörper in radialer Richtung eine doppelt so große minimale Ausdehnung wie der radial äußere Verbindungskörper auf. Die vorgenannten Werte haben sich im Rahmen der vorliegenden Erfindung als besonders vorteilhaft erwiesen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:

Figur 1      eine Tellerfeder gemäß einem ersten Ausführungsbeispiel in der Draufsicht;

Figur 2      die Tellerfeder aus Figur 1 in der Seitenansicht;

Figur 3      die Ansicht eines Schnitts entlang der Linie III-III in Figur 1;

Figur 4      eine ähnliche Tellerfeder wie in den Figuren 1 bis 3 gemäß einem weiteren Ausführungsbeispiel in der Draufsicht;

Figur 5      die Tellerfeder aus Figur 4 in der Vorderansicht;

Figur 6      die Tellerfeder aus Figur 4 in der Seitenansicht;

Figur 7      die Ansicht eines Schnitts entlang der Linie VII-VII in Figur 4;

Figur 8      eine perspektivische Darstellung der Tellerfeder aus den Figuren 4 bis 6;

Figur 9      eine Tellerfeder gemäß einem weiteren Ausführungsbeispiel in der Draufsicht;

Figur 10 die Ansicht eines Schnitts entlang der Linie X-X in Figur 9;

Figur 11 eine Tellerfeder gemäß einem weiteren Ausführungsbeispiel in der Draufsicht;

Figur 12 eine ähnliche Tellerfeder wie in Figur 11 gemäß einem weiteren Ausführungsbeispiel in der Draufsicht;

Figur 13 eine ähnliche Tellerfeder wie in den Figuren 11 und 12 gemäß einem weiteren Ausführungsbeispiel in der Draufsicht;

Figur 14 einen vergrößerten Ausschnitt aus Figur 1 und

Figur 15 einen vergrößerten Ausschnitt aus Figur 9.

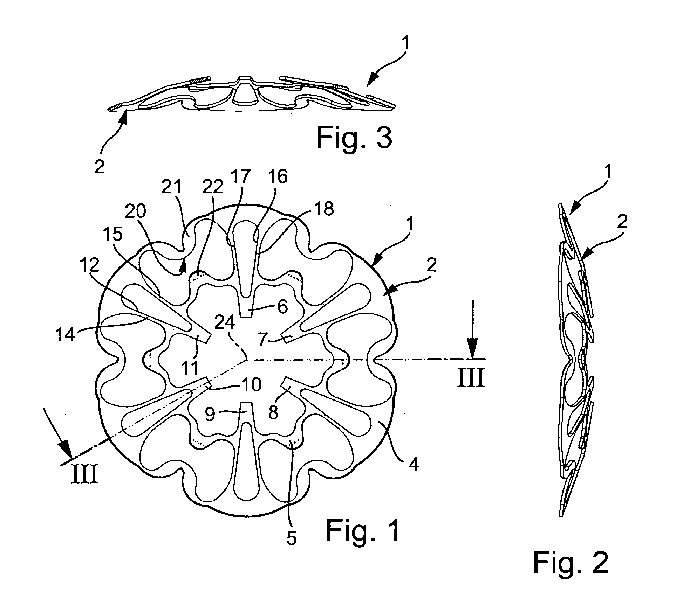

In den Figuren 1 bis 3 ist eine Tellerfeder 1 gemäß einem ersten Ausführungsbeispiel in verschiedenen Ansichten dargestellt. Die Tellerfeder 1 umfasst einen Grundkörper 2. Bei herkömmlichen Tellerfedern hat der Grundkörper zum Beispiel die Gestalt einer Kreisringscheibe, von der sich mehrere Zungen radial nach innen erstrecken. Gemäß einem wesentlichen Aspekt der vorliegenden Erfindung umfasst der Grundkörper 2 zwei ringartige Verbindungskörper 4 und 5, die einstückig miteinander verbunden sind. Der ringartige Verbindungskörper 4 ist radial außerhalb des ringartigen Verbindungskörpers 5 angeordnet. Daher wird der Verbindungskörper 4 auch als radial äußerer Verbindungskörper bezeichnet. Analog wird der Verbindungskörper 5 als radial innerer Verbindungskörper bezeichnet. Die beiden Verbindungskörper 4, 5 haben gemäß einem weiteren Aspekt der Erfindung jedoch nicht die Gestalt einer Kreisringscheibe, sondern weisen Bereiche mit unterschiedlichen Krümmungen und Verbindungsbereiche auf, in denen die beiden Verbindungskörper 4 und 5 einstückig miteinander verbunden sind.

Von dem radial inneren Verbindungskörper 5 erstrecken sich Zungen 6 bis 11 radial nach innen. Die Zungen 6 bis 11 sind gleichmäßig über den Umfang des radial inneren Verbindungskörpers 5 verteilt. Radial außerhalb der Zunge 11 ist ein Langloch 12 in dem Grundkörper 2 ausgespart, das sich radial nach außen erweitert. Radial außerhalb des Langlochs 12 erstreckt sich der radial äußere Verbindungskörper 4. Radial innerhalb des Langlochs 12 erstreckt sich der radial innere Verbindungskörper 5. Die Zunge 11 ist einstückig mit dem radial inneren Verbindungskörper 4 verbunden. Das Langloch 12 wird, in Umfangsrichtung betrachtet, seitlich von zwei Zungenverbindungsstegen 14, 15 begrenzt. Die Zungenverbindungsstege 14, 15 erstrecken sich in radialer Richtung und verbinden die beiden Verbindungskörper 4 und 5 im Bereich der Zunge 11 einstückig miteinander. Radial außerhalb der Zunge 6 ist ein Langloch 16 angeordnet, das von zwei Zungenverbindungsstegen 17, 18 begrenzt wird. Das Langloch 16 und die Zungenverbindungsstege 17, 18 haben jeweils die gleiche Gestalt wie das Langloch 12 und die Zungenverbindungsstege 14, 15. Die Tellerfeder 1 ist im Bereich der übrigen Zungen 7 bis 10 analog gestaltet.

Die Zungenverbindungsstege 15 und 17 begrenzen ein Durchgangsloch 20 in Umfangsrichtung, das in dem Grundkörper 2 der Tellerfeder 1 ausgespart ist. Radial außen wird das Durchgangsloch 20 von einem Verbindungskörperabschnitt 21 des radial äußeren Verbindungskörpers 4 begrenzt. Radial innen wird das Durchgangsloch 20 von einem Verbindungskörperabschnitt 22 des radial inneren Verbindungskörpers 5 begrenzt. Der Verbindungskörperabschnitt 21 ist, bezogen auf einen Mittelpunkt 24 der Tellerfeder 1, konkav nach innen gekrümmt. Der Verbindungskörperabschnitt 22 ist, bezogen auf den Mittelpunkt 24 der Tellerfeder 1, konvex nach außen gekrümmt. Durch die gekrümmte Ausbildung der Verbindungskörperabschnitte 21 und 22 erhält das Langloch 20 in der Draufsicht eine im Wesentlichen knochenförmige Gestalt. Die Tellerfeder 1 ist um den Mittelpunkt 24 punktsymmetrisch gestaltet. Darüber hinaus ist die Tellerfeder 1 um eine senkrecht zur Papierebene durch den Mittelpunkt 24 verlaufende Rotationsachse rotationssymmetrisch ausgebildet.

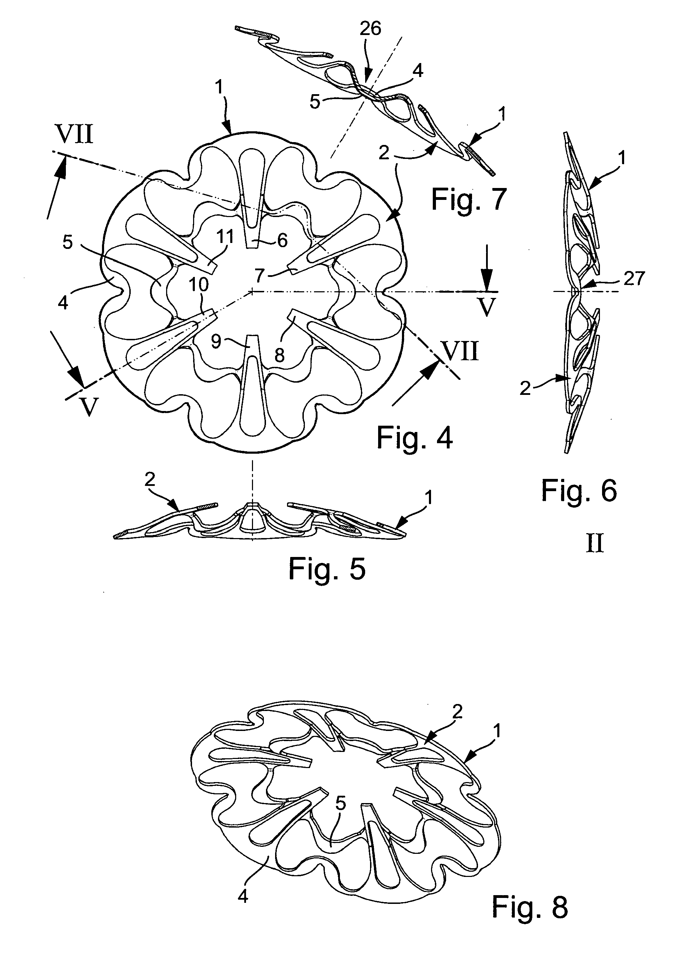

In den Figuren 4 bis 8 ist eine ähnliche Tellerfeder wie in den Figuren 1 bis 3 in verschiedenen Ansichten dargestellt. Zur Bezeichnung gleicher Teile werden die gleichen Bezugszeichen verwendet. Um Wiederholungen zu vermeiden, wird auf die vorangegangene Beschreibung der Figuren 1 bis 3 verwiesen. Im Folgenden wird nur auf die Unterschiede zwischen den beiden Ausführungsbeispielen eingegangen.

Bei dem in Figur 1 bis 3 dargestellten Ausführungsbeispiel hat die Tellerfeder 1, in ihrer perspektivischen Gesamtheit betrachtet, im Wesentlichen die Gestalt eines Kegelmantels. Bei dem in den Figuren 4 bis 8 dargestellten Ausführungsbeispiel sind die Verbindungskörper 4, 5, wie zum Beispiel an der Stelle 26 in Figur 7 und der Stelle 27 in Figur 6 gezeigt ist, aus der Ebene der Tellerfeder 1 herausgewölbt. Dadurch soll ein gezieltes axiales Ausbiegen der Verbindungskörper 4, 5 erreicht werden.

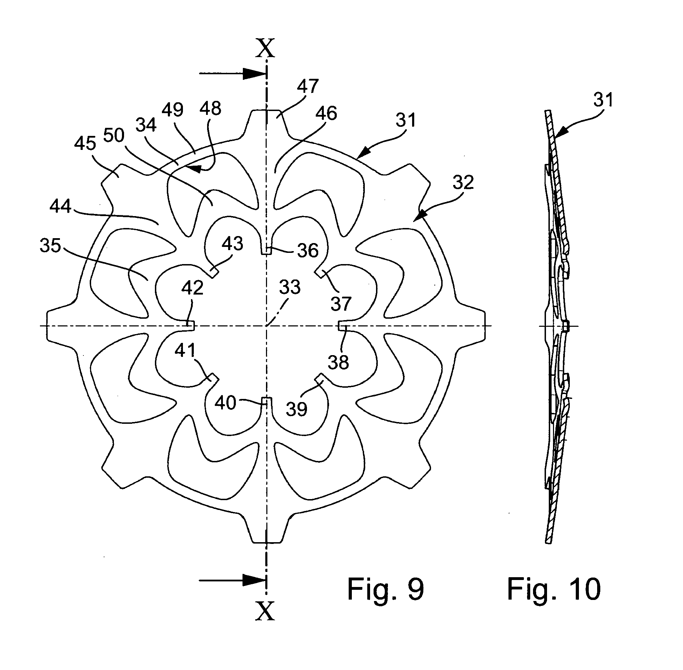

In den Figuren 9 und 10 ist eine Tellerfeder 31 mit einem Grundkörper 32 in verschiedenen Ansichten dargestellt. Der Grundkörper 32 umfasst zwei ringartige Verbindungskörper 34 und 35. Der radial äußere ringartige Verbindungskörper 34 hat im Wesentlichen die Gestalt einer Kreisringscheibe, die konzentrisch zu einem Mittelpunkt 33 der Tellerfeder 31 verläuft. Von dem radial inneren Verbindungskörper 35 erstrecken sich acht Zungen 36 bis 43 radial nach innen. Die Zungen sind einstückig mit dem radial inneren Verbindungskörper 35 verbunden. Der radial innere Verbindungskörper 35 ist im Bereich der Zunge 43 einstückig mit einem Zungenverbindungssteg 44 verbunden, der sich in Verlängerung der Zunge 43 radial nach außen erweitert und den radial inneren Verbindungskörper 35 einstückig mit dem radial äußeren Verbindungskörper 34 verbindet. In Verlängerung des Zungenverbindungsstegs 44 erstreckt sich ein Ausleger 45 von dem radial äußeren Verbindungskörper 34 radial nach außen. In gleicher Weise sind die beiden Verbindungskörper 34 und 35 radial außerhalb der Zunge 36 durch einen Zungenverbindungssteg 46 einstückig miteinander verbunden. In Verlängerung des Zungenverbindungsstegs 46 erstreckt sich von dem radial äußeren Verbindungskörper 34 ein weiterer Ausleger 47 radial nach außen.

Die beiden Zungenverbindungsstege 44 und 46 begrenzen ein Durchgangsloch 48 in dem Grundkörper 32 in Umfangsrichtung. Radial außen wird das Durchgangsloch 48 von einem Verbindungskörperabschnitt 49 des radial äußeren Verbindungskörpers 34 begrenzt. Radial innen wird das Durchgangsloch 48 von einem Verbindungskörperabschnitt 50 des radial inneren Verbindungskörpers 35 begrenzt. Der Verbindungskörperabschnitt 49 ist konzentrisch zu dem Mittelpunkt 33 der Tellerfeder 31 angeordnet. Der radial innere Verbindungskörperabschnitt 50 des inneren Verbindungskörpers 35 ist, bezogen auf den Mittelpunkt 33 der Tellerfeder 31, konvex nach außen gekrümmt. Die Tellerfeder 31 ist, bezogen auf den Mittelpunkt 33, punktsymmetrisch und, bezogen auf eine senkrecht zur Papierebene durch den Mittelpunkt 33 verlaufende Rotationsachse, rotationssymmetrisch gestaltet.

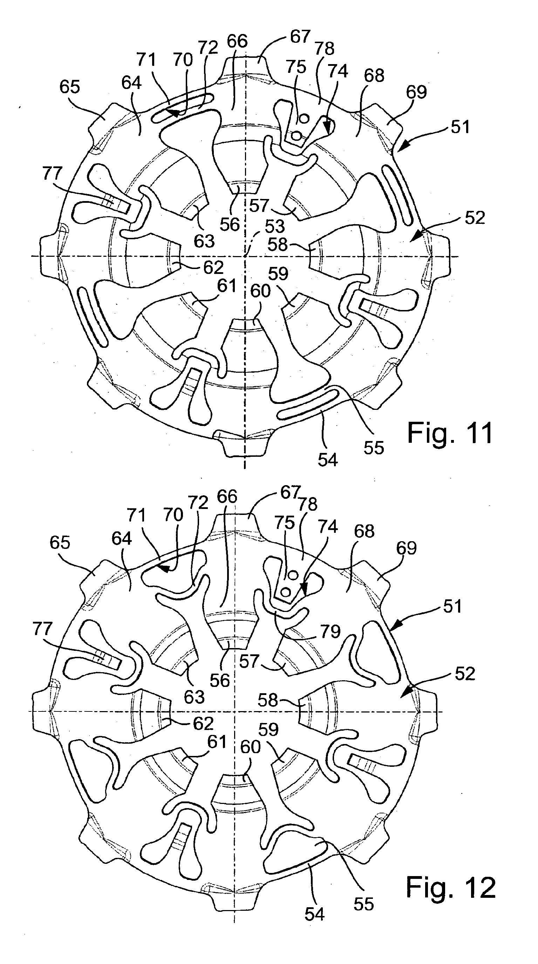

In Figur 11 ist eine Tellerfeder 51 mit einem Grundkörper 52 in der Draufsicht dargestellt. Der Grundkörper 52 umfasst zwei ringartige Verbindungskörper 54 und 55, die einstückig miteinander verbunden sind. Der radial äußere Verbindungskörper 54 hat im Wesentlichen die Gestalt einer Kreisringscheibe, die konzentrisch zu einem Mittelpunkt 53 der Tellerfeder 51 verläuft. Von dem radial inneren Verbindungskörper 55 erstrecken sich Zungen 56 bis 63 radial nach innen. In Verlängerung der Zunge 63 erstreckt sich ein Zungenverbindungssteg 64 in radialer Richtung zwischen den beiden Verbindungskörpern 54 und 55. In Verlängerung des Zungenverbindungsstegs 64 erstreckt sich von dem radial äußeren Verbindungskörper 54 ein Ausleger 65 radial nach außen. In gleicher Weise erstreckt sich in Verlängerung der Zunge 56 ein Zungenverbindungssteg 66 in radialer Richtung zwischen den beiden Verbindungskörpern 54 und 55. In Verlängerung des Zungenverbindungsstegs 66 erstreckt sich ein Ausleger 67 von dem radial äußeren Verbindungskörper 54 radial nach außen. In Verlängerung der Zunge 57 sind die beiden Verbindungskörper 54 und 55 durch einen weiteren Zungenverbindungssteg 68 verbunden. Ein weiterer Ausleger 69 erstreckt sich in Verlängerung des Zungenverbindungsstegs 68 von dem radial äußeren Verbindungskörper 54 radial nach außen. In Umfangsrichtung zwischen den beiden Zungenverbindungsstegen 65 und 66 ist ein Langloch 70 in dem Grundkörper 52 ausgespart, das radial außen von einem konzentrischen Verbindungskörperabschnitt 71 des radial äußeren Verbindungskörpers 54 begrenzt wird. Radial innen wird das Langloch 70 von einem ebenfalls konzentrisch verlaufenden Verbindungskörperabschnitt 72 des radial inneren Verbindungskörpers 55 begrenzt. Das Langloch 70 erstreckt sich in Umfangsrichtung.

Die beiden Zungenverbindungsstege 66 und 68 begrenzen in Umfangsrichtung ein Durchgangsloch 74. Von dem radial äußeren Verbindungskörper 54 erstreckt sich eine zusätzliche Zunge 75 radial innen in das Durchgangsloch 74 hinein. In ähnlicher Weise erstreckt sich eine Zunge 77 radial außerhalb und zwischen den Zungen 62 und 63 in ein ähnliches Durchgangsloch hinein. Die zusätzliche Zunge 77 ist etwas schmäler ausgeführt als die zusätzlichen Zungen 75. Darüber hinaus ist die zusätzliche Zunge 75 mit zwei Durchgangslöchern ausgestattet. Die zusätzlichen Zungen 75 und 77 wirken im eingebauten Zustand der Tellerfeder 51 mit einer (nicht dargestellten) Verschleißnachstelleinrichtung zusammen. Das Durchgangsloch 74 wird in radialer Richtung von einem konzentrisch verlaufenden Verbindungskörperabschnitt 78 des radial äußeren Verbindungskörpers 54 begrenzt. Radial innen wird das Durchgangsloch 74 von einem Verbindungskörperabschnitt 79 des radial inneren Verbindungskörpers 55 begrenzt. Der Verbindungskörperabschnitt 79 ist, bezogen auf den Mittelpunkt 53 der Tellerfeder 51, konkav nach innen gekrümmt.

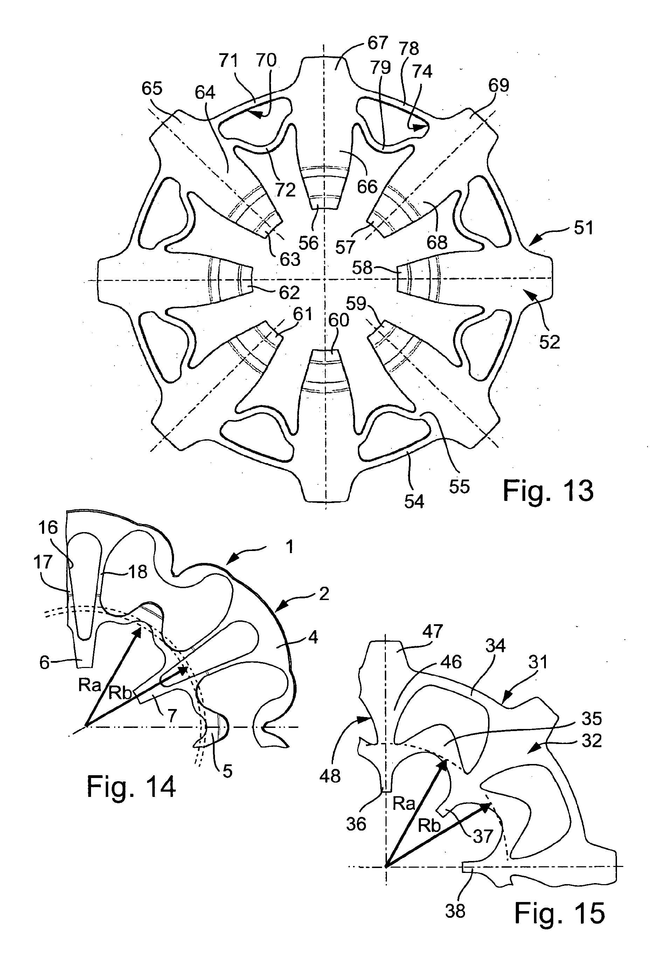

In den Figuren 12 und 13 sind ähnliche Ausführungsbeispiele wie in Figur 11 dargestellt. Zur Bezeichnung gleicher Teile werden die gleichen Bezugszeichen verwendet. Um Wiederholungen zu vermeiden, wird auf die vorangegangene Beschreibung der Figur 11 verwiesen. Im Folgenden wird nur auf die Unterschiede zwischen den einzelnen Ausführungsbeispielen eingegangen.

Bei dem in Figur 12 dargestellten Ausführungsbeispiel sind die Durchgangslöcher 70, in denen keine zusätzlichen Zungen angeordnet sind, anders gestaltet als bei dem in Figur 11 dargestellten Ausführungsbeispiel. In Figur 12 ist der Verbindungskörperabschnitt 72 des radial inneren Verbindungskörpers 55 zwischen den beiden Zungenverbindungsstegen 64 und 66 konkav nach innen gekrümmt.

Das in Figur 13 dargestellte Ausführungsbeispiel enthält keine zusätzlichen Zungen. Aus diesem Grund ist das Durchgangsloch 74 genauso ausgeführt wie das Durchgangsloch 70. Von dem Verbindungskörperabschnitt 78 erstreckt sich keine zusätzliche Zunge in das Durchgangsloch 74.

Ein Hauptaspekt der vorliegenden Erfindung ist die nicht konzentrische Anordnung von mindestens einem der Verbindungskörper. Durch die mindestens zwei Verbindungskörper, die auch als Kraftränder bezeichnet werden, kann die Eigensteifigkeit der Tellerfeder erheblich erhöht werden. Die nicht konzentrische Anordnung mindestens eines Kraftrandes schafft die erforderliche Weichheit zwischen den Krafträndern, um die Spannungen in den einzelnen Krafträndern auf unkritische Werte zu beschränken. Das wird durch ein gezieltes Ausbiegen einzelner Bereiche des Kraftrandes oder der Bereiche zwischen zwei Krafträndern in axialer oder radialer Richtung erreicht. In der nicht konzentrischen Anordnung der Kraftränder kann dieser Effekt auch durch die Kombination von radial und nicht radial angeordneten Bereichen erreicht werden.

Ein weiteres wesentliches Merkmal der erfindungsgemäßen Tellerfeder ist, dass der radial innere Verbindungskörper oder Kraftrand durch definierte Außen- und Innenkonturen beschrieben wird.

In Figur 14 ist ein Ausschnitt aus Figur 1 vergrößert dargestellt. Wie man in Figur 14 sieht, weist der radial innere Verbindungskörper eine Innenkontur mit einem variablen Innenradius auf. Darüber hinaus weist der radial innere Verbindungskörper 5 eine Außenkontur mit einem ebenfalls variablen Außenradius auf. Der Minimalwert des Außenradius der Außenkontur ist mit Ra bezeichnet. Der Maximalwert des Innenradius der Innenkontur ist mit Rb bezeichnet. Im Rahmen der vorliegenden Erfindung haben sich für das Verhältnis zwischen der Differenz aus Rb und Ra zu einer Dicke t der Tellerfeder folgende Werte als besonders vorteilhaft erwiesen:

$$-2 \leq (Rb - Ra)/t \leq 100.$$

Gemäß einem weiteren wesentlichen Aspekt der Erfindung ist die minimale Breite des radial inneren Verbindungskörpers, das heißt, dass die Ausdehnung des radial inneren Verbindungskörpers in radialer Richtung, doppelt so groß ist wie die minimale Breite des radial äußeren Verbindungskörpers.

In Figur 15 ist ein Ausschnitt aus Figur 9 vergrößert dargestellt. In Figur 15 sieht man, dass die Radien Ra und Rb gleich groß sind. Demzufolge ist das Verhältnis zwischen der Differenz der Radien zu der Dicke der Tellerfeder gleich null.

**Bezuctszeichenliste**

1. Tellerfeder
2. Grundkörper
4. Verbindungskörper
5. Verbindungskörper
6. Zunge
7. Zunge
8. Zunge
9. Zunge
10. Zunge
11. Zunge
12. Langloch
14. Zungenverbindungssteg
15. Zungenverbindungssteg
16. Langloch
17. Zungenverbindungssteg
18. Zungenverbindungssteg
20. Durchgangsloch
21. Verbindungskörperabschnitt
22. Verbindungskörperabschnitt
24. Mittelpunkt
26. Stelle
27. Stelle
31. Tellerfeder
32. Grundkörper
33. Mittelpunkt
34. Verbindungskörper
35. Verbindungskörper
36. Zunge
37. Zunge
38. Zunge
39. Zunge
40. Zunge
41. Zunge
42. Zunge
43. Zunge
44. Zungenverbindungssteg
45. Ausleger
46. Zungenverbindungssteg
47. Ausleger
48. Durchgangsloch
49. Verbindungskörperabschnitt
50. Verbindungskörperabschnitt
51. Tellerfeder
52. Grundkörper
53. Mittelpunkt
54. Verbindungskörper
55. Verbindungskörper
56. Zunge
57. Zunge
58. Zunge
59. Zunge
60. Zunge
61. Zunge
62. Zunge
63. Zunge
64. Zungenverbindungssteg
65. Ausleger
66. Zungenverbindungssteg
67. Ausleger
68. Zungenverbindungssteg
69. Ausleger
70. Langloch
71. Verbindungskörperabschnitt
72. Verbindungskörperabschnitt
74. Durchgangsloch
75. Zunge
77. Zunge
78. Verbindungskörperabschnitt
79. Verbindungskörperabschnitt

## Patentansprüche

1. Tellerfeder mit einem Grundkörper (2;32;52) und nach innen gerichteten Zungen (6-11;36-43;56-63), **dadurch gekennzeichnet, dass** der Grundkörper (2;32;52) mindestens zwei ringartige Verbindungskörper (4,5;34,35;54,55) umfasst, die an mehreren Verbindungsstellen, bezogen auf einen gemeinsamen Mittelpunkt, in radialer Richtung miteinander verbunden und in Umfangsrichtung zwischen den Verbindungsstellen in radialer Richtung voneinander beabstandet sind.

2. Tellerfeder nach Anspruch 1, **dadurch gekennzeichnet, dass** mindestens ein Verbindungskörper (4,5;34,35;54,55) nicht konzentrisch zu dem gemeinsamen Mittelpunkt verläuft.

3. Tellerfeder nach einem der vorhergehenden Ansprüche, **dadurch gekennzeichnet, dass** die Verbindungskörper (4,5;34,35;54,55) in Umfangsrichtung zwischen zwei Verbindungsstellen unterschiedlich gekrümmt sind.

4. Tellerfeder nach einem der vorhergehenden Ansprüche, **dadurch gekennzeichnet, dass** der radial äußere Verbindungskörper (4) zwischen zwei Verbindungsstellen konkav nach innen gekrümmt ist.

5. Tellerfeder nach Anspruch 3 oder 4, insbesondere nach einem der vorhergehenden Ansprüche, **dadurch gekennzeichnet, dass** der radial innere Verbindungskörper (5) zwischen zwei Verbindungsstellen konvex nach außen gekrümmt ist.

6. Tellerfeder nach Anspruch 3 oder 4, insbesondere nach einem der vorhergehenden Ansprüche, **dadurch gekennzeichnet, dass** der radial innere Verbindungskörper (35) zwischen zwei Verbindungsstellen stärker konvex nach außen gekrümmt ist als der radial äußere Verbindungskörper (34).

7. Tellerfeder nach Anspruch 3 oder 4, insbesondere nach einem der vorhergehenden Ansprüche, **dadurch gekennzeichnet, dass** der radial innere Verbindungskörper (55) zwischen zwei Verbindungsstellen konkav nach innen gekrümmt ist.

8. Tellerfeder nach einem der Ansprüche 3 bis 7, **dadurch gekennzeichnet, dass** sich zwischen zwei Verbindungsstellen eine zusätzliche Zunge (75,77) von dem radial äußeren Verbindungskörper (54) radial nach innen erstreckt.

9. Tellerfeder nach einem der Ansprüche 3 bis 8, **dadurch gekennzeichnet, dass** mindestens einer der Verbindungskörper (5), insbesondere der radial innere Verbindungskörper, zwischen zwei Verbindungsstellen in axialer Richtung aus einer Fläche herausragt, in der sich die Tellerfeder (1) erstreckt.

10. Tellerfeder nach einem der vorhergehenden Ansprüche, **dadurch gekennzeichnet, dass** die Verbindungskörper (4,5) radial außerhalb der Zungen (6-11) jeweils durch zwei Zungenverbindungsstege (17,18) miteinander verbunden sind.

11. Tellerfeder nach einem der vorhergehenden Ansprüche, **dadurch gekennzeichnet, dass** der innere ringartige Verbindungskörper (5;35) eine Außenkontur mit einem über dem Umfang variablen Radius aufweist, dessen Minimalwert kleiner als oder gleich dem Maximalwert eines über dem Umfang variablen Radius einer Innenkontur des inneren ringartigen Verbindungskörpers (5) ist.

12. Tellerfeder nach Anspruch 11, **dadurch gekennzeichnet, dass** das Verhältnis aus der Differenz des Maximalwerts minus dem Minimalwert zu der Dicke der Tellerfeder größer als oder gleich -2 ist.

13. Tellerfeder nach Anspruch 11 oder 12, **dadurch gekennzeichnet, dass** das Verhältnis aus der Differenz des Maximalwerts minus dem Minimalwert zu der Dicke der Tellerfeder kleiner als oder gleich 100 ist.

14. Tellerfeder nach einem der vorhergehenden Ansprüche, **dadurch gekennzeichnet, dass** der radial innere Verbindungskörper (5;35) in radialer Richtung eine doppelt so große minimale Ausdehnung wie der radial äußere Verbindungskörper aufweist.

Fig. 3

Fig. 1

Fig. 2

Fig. 7

Fig. 4

Fig. 5

Fig. 6

II

Fig. 8

Fig. 9          Fig. 10

Fig. 11

Fig. 12

Fig. 13

Fig. 14

Fig. 15

Europäisches
Patentamt

**EUROPÄISCHER RECHERCHENBERICHT**

Nummer der Anmeldung

EP 06 02 4699

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | US 4 538 716 A (REIK WOLFGANG [DE]) 3. September 1985 (1985-09-03) * Spalte 6, Zeile 28 - Spalte 10, Zeile 19; Abbildungen 2-5 * ----- | 1,2 | INV. F16F1/32 F16D13/58 |
| X | US 4 513 849 A (REIK WOLFGANG [DE]) 30. April 1985 (1985-04-30) * Spalte 4, Zeile 14 - Spalte 6, Zeile 31; Abbildungen 2-4 * ----- | 1,2 | |
| X | US 4 541 514 A (REIK WOLFGANG [DE]) 17. September 1985 (1985-09-17) * Spalte 5, Zeile 22 - Spalte 7, Zeile 30; Abbildungen 1-3 * ----- | 1,2 | |
| A | DE 70 15 469 U (STROMAG MASCHF [DE]) 3. August 1972 (1972-08-03) * das ganze Dokument * ----- | 1 | |
| A | DE 12 12 363 B (STROMAG MASCHF) 10. März 1966 (1966-03-10) * das ganze Dokument * ----- | 1 | RECHERCHIERTE SACHGEBIETE (IPC) |
| A | DE 34 28 001 A1 (LUK LAMELLEN & KUPPLUNGSBAU [DE]) 30. Januar 1986 (1986-01-30) * Seite 12, Zeile 11 - Seite 15, Zeile 10; Abbildungen 1,2 * ----- | 1 | F16F F16D |

Der vorliegende Recherchenbericht wurde für alle Patentansprüche erstellt

| Recherchenort | Abschlußdatum der Recherche | Prüfer |
|---|---|---|
| München | 27. März 2007 | Prussen, Jean |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 4699

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-03-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 4538716 | A | 03-09-1985 | DE | 3204614 A1 | 18-08-1983 |
| US 4513849 | A | 30-04-1985 | DE | 3204533 A1 | 18-08-1983 |
| US 4541514 | A | 17-09-1985 | DE | 3204557 A1 | 18-08-1983 |
| DE 7015469 | U | 03-08-1972 | KEINE | | |
| DE 1212363 | B | 10-03-1966 | KEINE | | |
| DE 3428001 | A1 | 30-01-1986 | FR | 2568337 A1 | 31-01-1986 |
| | | | JP | 61041029 A | 27-02-1986 |

EPO FORM P0461

Für nähere Einzelheiten zu diesem Anhang : siehe Amtsblatt des Europäischen Patentamts, Nr.12/82